# EUROPEAN PATENT SPECIFICATION

(11) **EP 3 044 714 B1**
(45) Date of publication and mention of the grant of the patent: **06.05.2020**
(21) Application number: 15796032.9
(22) Date of filing: 22.05.2015
(51) Int. Cl.: G06F 21/00, G06F 21/44, G06Q 20/34, G06Q 20/36, G06Q 20/40, H04L 9/32

(54) **SYSTEMS AND METHODS FOR LINKING DEVICES TO USER ACCOUNTS**
SYSTEME UND VERFAHREN ZUM VERBINDEN VON VORRICHTUNGEN MIT BENUTZERKONTEN
SYSTÈMES ET PROCÉDÉS POUR RELIER DES DISPOSITIFS À DES COMPTES D'UTILISATEUR

(30) Priority: 23.05.2014 US 201414286248
(43) Date of publication of application: 20.07.2016
(73) Proprietor: Samsung Electronics Co., Ltd., Suwon-si, Gyeonggi-do (KR)
(72) Inventor: HUANG, Enyang, Andover, Massachusetts 01810 (US); GRAYLIN, William Wang, Winchester, Massachusetts 01890 (US)
(74) Representative: HGF Limited
(86) International application number: PCT/US2015/032110
(87) International publication number: WO 2015/179726

(56) References cited:
- WO-A1-2013/112839
- US-A1- 2008 021 841
- US-A1- 2012 045 057
- US-A1- 2012 136 796
- US-A1- 2013 262 317
- US-A1- 2013 320 080
- US-A1- 2014 058 951
- US-A1- 2014 066 015
- John Padgette ET AL: "Guide to Bluetooth Security Recommendations of the National Institute of Standards and Technology", , 1 June 2012 (2012-06-01), pages 1-39, XP055177412, Retrieved from the Internet: URL:http://csrc.nist.gov/publications/nist pubs/800-121-rev1/sp800-121_rev1.pdf [retrieved on 2015-03-18]
- Anonymous: "Replay attack - Wikipedia", , 12 May 2014 (2014-05-12), XP055599540, Retrieved from the Internet: URL:https://en.wikipedia.org/w/index.php?t itle=Replay_attack&oldid=608247626 [retrieved on 2019-06-25]

## Description

### FIELD

The present disclosure relates to magnetic stripe storage and transmission devices.

### BACKGROUND

Transmission of magnetic stripe data has been done primarily by swiping a magnetic stripe card against a magnetic stripe reader (MSR) to enable payment, identification (ID), and access control functions. Mobile wallet applications on smartphones and tablets have had difficulty interacting with existing merchant point of sale (POS) devices or other devices with MSRs. Contactless reader enabled POS terminals (typically using, for example, an ISO 14443 standard) are not ubiquitous to accept contactless or near field communications (NFC) payments. It would be expensive and would take time to replace the millions of merchant POS devices or door locks that only accept magnetic stripe cards, just to interact with NFC phones or other transmission means like barcodes.

In WO 2013/112839, there is disclosed a universal card for use with an e-wallet application on a mobile device, wherein the universal card can be programmed through an interface with the e-wallet application via a short range communication link. Once programmed, the universal card emulates a function of a traditional (magnetic stripe) card.

In US 2103/0320080, there is disclosed a method for controlling a payment card comprising a magnetic stripe emulator and a set of input regions. The method includes: receiving a tap input, attempting a wireless communication with a mobile computing device; suppressing a payment function of the magnetic stripe emulator in response to failed wireless communication with the mobile computing device; receiving a series of inputs through the set of input regions; authenticating the series of inputs as a passcode; and, in response to authenticating the series of inputs as the passcode, enabling the payment function of the magnetic stripe emulator.

### SUMMARY

The present disclosure relates to devices, systems, and methods including a magnetic stripe storage and transmission device (also referred to as a magnetic stripe transporter (MST)) for use in conjunction with a mobile wallet application to capture, store and transmit magnetic stripe card data to merchants' conventional point of sale (POS) terminals and other devices with magnetic stripe readers (MSRs) or checkout systems, in physical and virtual environments. The devices, systems, and methods provide secure binding, linking, or pairing of the MST to a user account. In one aspect, this unique binding of the MST to a specific user account provides increased security. According to a first aspect of the invention, there is provided a method of binding a magnetic stripe transporter to a user account set-up on a server, as set forth in the accompanying claim 1. According to a second aspect of the invention, there is provided a method of binding a magnetic stripe transporter to a user account, as set forth in the accompanying claim 7. According to a third aspect of the invention, there is provided a method of binding a magnetic stripe transporter to a first user account set-up on a server, as set forth in the accompanying claim 10.

### BRIEF DESCRIPTION OF THE DRAWINGS

Embodiments of devices, systems, and methods are illustrated in the figures of the accompanying drawings which are meant to be exemplary and not limiting, in which like references are intended to refer to like or corresponding parts, and in which:
FIG. 1 is a functional diagram of an overview of a binding of a MST to a user account;
FIG. 2 is a flow diagram of a method of operation of initializing the MST and checking the MST's binding status;
FIG. 3 is a flow diagram of a method of binding the MST to a user account;
FIG. 4 is a flow diagram of another method of binding the MST to a user account; and
FIG. 5 is a functional block diagram of the MST.

### DETAILED DESCRIPTION

Detailed examples of devices and systems, and embodiments of methods are disclosed herein, however, it is to be understood that the disclosed examples and embodiments are merely exemplary of the devices, systems, and methods, which may be embodied in various forms. Therefore, specific functional details disclosed herein are not to be interpreted as limiting, but merely as a basis for the claims and as a representative basis for teaching one skilled in the art to variously employ the present disclosure.

Generally, the devices, systems, and methods disclosed herein can include, and may be implemented, within a number of different devices and computer systems, including, for example, general-purpose computing systems, server-client computing systems, consumer-merchant computing systems, mainframe computing systems, a cloud computing infrastructure, telephone computing systems, laptop computers, desktop computers, smart phones, cellular phones, personal digital assistants (PDAs), tablet computers, and other mobile devices. The devices and computing systems may have one or more databases and other storage apparatuses, servers, and additional components, for example, processors, modems, terminals and displays, computer-readable media, algorithms, modules and applications, and other computer-related components. The devices and computer systems and/or computing infrastructures are configured, programmed, and adapted to perform the functions and processes of the systems and methods as disclosed herein.

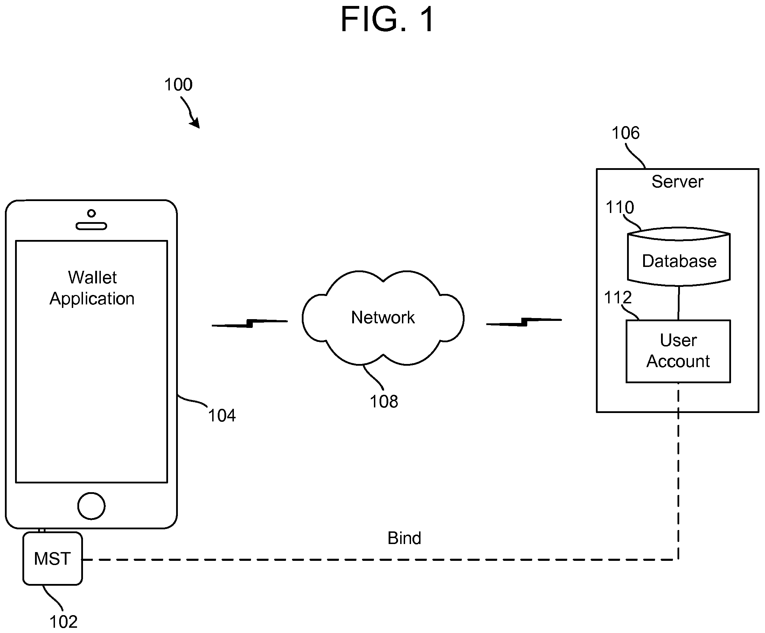

An overview of a system 100 for binding a MST to a user account according to an illustrative example is described with reference to FIG. 1. The system 100 includes a MST 102, a mobile communication device 104, and a server 106. The MST 102 is adapted to interface with the mobile communication device 104, and the mobile communication device 104 communicates with the server 106 via a network 108. The server 106 may include one or more databases 110 and user accounts 112. The one or more databases 110 may store association data of the MST 102 and user account 112, and one or more keys used by the MST 102 and/or the server 106. The MST 102 may be bound with the user account 112, as described in further detail below (it should be appreciated that the terms binding and pairing are used interchangeably herein).

As illustrated, the MST 102 may be a dongle that may be connected to and disconnected from the mobile communication device 104. The MST 102 may communicate with the mobile communication device 104 through an audio port and/or through other types of communication interfaces, for example including, but not limited to, a USB port, a 30pin or 9pin Apple interface, a Bluetooth interface, a near field communication (NFC), and other serial interfaces. While the MST 102 is illustrated as a dongle, the MST may be another type of peripheral device that communicates with the mobile communication device 104 through a contactless interface, such as Bluetooth or NFC.

In an aspect, a user may set-up the user account 112 on the server 106, for example, by downloading and/or installing a wallet application in the mobile communication device 104. The user may also set-up a user account 112 using a computer connected to the network 108 by accessing a user account web portal. To set up the user account 112, the user may specify a user name, password and a personal PIN. The password may be used to login to the wallet application on the mobile communication device 104. Once the user is logged in, the personal PIN may be used to enter a payment card section of the wallet application, authenticate with the MST 102, as well as to unlock the wallet application.

The user may optionally add the MST 102 to the user account 112 by specifying a globally unique identifier (GUID) of the MST 102 (also referred to herein as ID_{MST}). If the GUID specified by the user is valid and is "occupied," meaning it is currently added under another user account, then it cannot be accepted under the user account 112. If the GUID is valid and not occupied, meaning it is not currently bound with a user account, the server 106 may generate a provisioning token or "binding token." The provisioning token includes the personal PIN and is backed by the authority of the server. The provisioning token may then be securely injected to the MST 102 when the wallet application next communicates with the server 106. The personal PIN can be seen as a shared secret between the MST 102 and the user, allowing authentication to operate the MST 102 to be performed in the absence of server connectivity. The PIN (which only the user knows) is used to authenticate with the MST 102 to operate any card data stored on the MST 102. A copy of the PIN may also be stored on the server 106 and used as described below. Operation of the MST 102 using the PIN-based authentication can be done with or without the mobile communication device 104 being connected to the server 106 via the network 108. This allows the MST 102 to be operated to utilize the card data stored on the MST 102, even when no network connection exists.

Each MST 102 may be initially open to be bound with a user account 112. Once the MST 102 is bound, the MST 102 may be locked and have to be unlocked to change modes and parameters on the MST 102. The MST 102 can store cardholder data by either an initial load at manufacturing, loading via a wireless communication network after setting up the user account 112, and/or by the consumer loading his/her own card(s) data directly into the MST 102 using the mobile wallet application. In general, the user is a person that has set up a user account, for example, on the server 106 via a cloud computing infrastructure (such as via the network 108), and has initialized the wallet application on his/her mobile communication device 104.

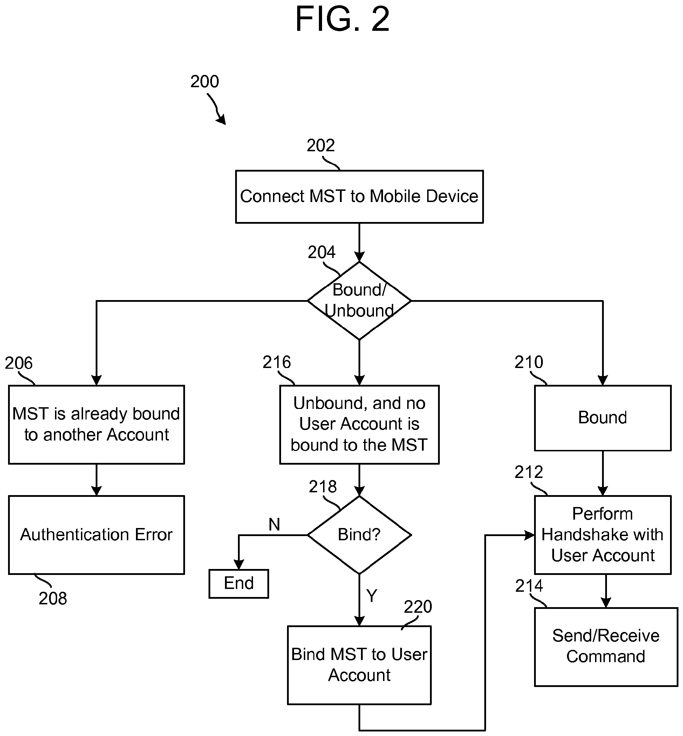

A method 200 of initializing and binding the MST 102 to a user account 112 according to an illustrative embodiment is described with reference to FIG. 2. An MST is initialized for the first time to a user account by plugging in or connecting the MST to the mobile communication device, illustrated as block 202. Upon connecting the MST to the mobile communication device, the wallet application recognizes or determines the status of the MST as bound and unbound, illustrated as block 204.

When the MST dongle has already been bound to another user account, the wallet application will recognize the MST as bound to another user account, illustrated as block 206, and generate an authentication error, illustrated as block 208.

When the MST has been bound to the appropriate user account, the wallet application recognizes the MST as bound, illustrated as block 210. The MST and the user account may then perform a handshake, illustrated as 212, and send and receive commands, illustrated as block 214.

When the MST has not been bound and there is no user account bound to the MST, upon connecting the MST to the mobile communication device, for example, a smartphone with the wallet application thereon, the wallet application recognizes the MST as unbound, illustrated as block 216. The wallet application may then face a determination as to whether the MST should be bound to the user account, illustrated as block 218. If the appropriate user account user desires to bind the MST, a binding process begins and the MST is bound to the user account, illustrated as block 220. Upon binding the MST to the user account, the MST and the user account may then perform a handshake, illustrated as 212, and send and receive commands, illustrated as block 214.

Once the MST has been bound with the user account, the user can use the wallet application to load his/her cards by swiping the cards on a built in magnetic stripe reader (MSR) of the MST or a separate MSR that may be connected to the MST or the mobile communication device. The card data may be digitized and encrypted, and stored into the memory means or secure element of the MST for later use.

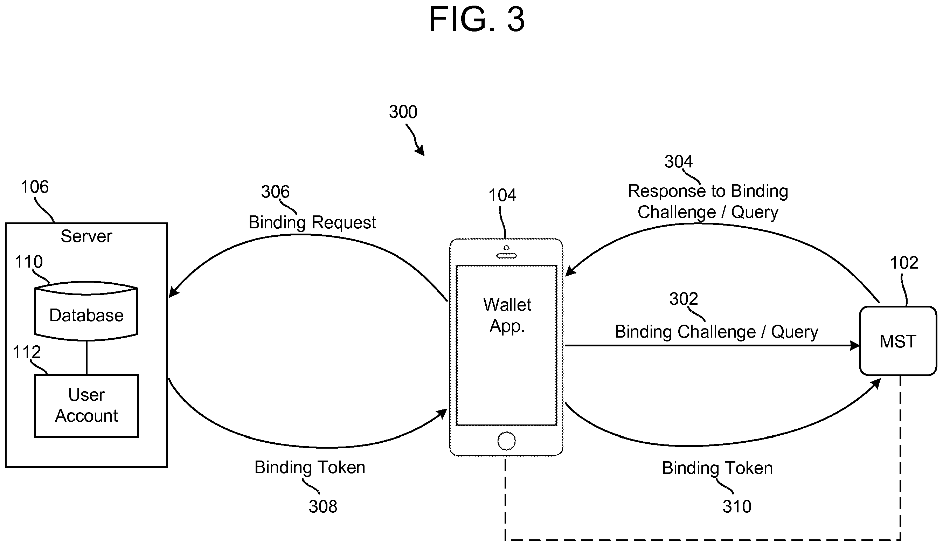

A method 300 of paring the MST 102 to the user account 112 according to an illustrative embodiment is described with reference to FIG. 3. As illustrated, upon connecting the MST 102 to the mobile communication device 104 operating the wallet application, the wallet application sends a binding challenge or query to the MST 102, illustrated as 302. The MST 102 responds to the binding challenge / query by sending a response, illustrated as 304, to the wallet application on the mobile communication device 104. The wallet application on the mobile communication device 104 then sends a binding request, illustrated as 306, to the server 106. The server 106 may authenticate the MST 102 and the request. The server 106 then sends a binding token, illustrated as 308, to the wallet application on the mobile communication device 104 to bind the MST to the user account 112. The wallet application on the mobile communication device 104 forwards the binding token to the MST 102, illustrated as 310.

In an embodiment, the MST 102 contains an ID_{MST} (such as 16-byte non-predictable ID) and a key K_{MST} (such as a 16-byte key) stored in memory. In this embodiment, the server 106 is capable of generating K_{MST} given the ID_{MST}. The K_{MST} is then a shared secret between the server 106 and the MST 102. Each MST may have a different K_{MST} and ID_{MST} for security purposes.

The MST 102 and server 106 communicate indirectly via the wallet application on the mobile communication device 104. The communications between the server 106 and the mobile communication device 104 may be secured using SSL3/TLS. Communications between the MST 102 and the mobile communication device 104 may be encrypted using a session key Kₛₑₛₛᵢₒₙ derived from the personal PIN and session random nonce.

In this embodiment, the mobile communication device 104 sends the binding challenge (302), including an indication to initiate binding (for example a random number or other type of initiation indication). The response to the binding challenge / query (304) sent from the MST 102 to the mobile communication device 104 includes the ID_{MST} and a random number R_{MST} (also referred to as a nonce) generated by the MST. The binding request (306), with input from the user includes the user's username, password, and the ID_{MST} and R_{MST} generated by the MST. The server 106 authenticates the user with the user account 112 using the username and password. The server 106 then checks to see if the received ID_{MST} is valid and that the MST 102 is currently not bound to any other user account. The server 106 computes K_{MST} using the ID_{MST}, and sends back a binding token (308) signed using K_{MST}. The binding token may include R_{MST}, a server generated time-stamp R_{S}, the PIN, and may also include some auxiliary information, such as a verification component that will have to be transported along with the signature in order for it to be verifiable by the MST 102. The wallet application on the mobile communication device 104 forwards this binding token to the MST 102 (310). The MST verifies the binding token and matches R_{MST}. If everything looks fine, the MST installs the PIN. At this moment, the MST is said to be bound or bound to the user account 112, and the user can operate the MST using the personal PIN.

In this embodiment, the handshake (illustrated as block 212 in FIG. 2) may be performed by the wallet application first sending an Exchange Nonce (EN) command to the MST 102 along with a random challenge R_{W}¹ generated by the wallet application. The MST 102, upon receiving the message, generates and returns a random nonce R_{MST}¹. The MST 102 also echoes EN, by sending EN back to the wallet application. At this stage, both the wallet application and the MST 102 know the other's fresh nonce. During subsequent communications, the sender always acknowledges the receiver's nonce as part of the message payload. The purpose of the handshake for exchanging nonce can be seen as an effort to defray any replay attacks. The counter-party's nonce is in service until another handshake is performed, for example, until the wallet application sends the next EN message. There may also be a life-span associated with each handshake, and the MST 102 and/or the wallet application may request a new handshake if a previous handshake has expired.

After the handshake is complete, both the wallet application and the MST 102 are ready to send and receive commands (illustrated as block 214 in FIG. 2). The authentication is performed on a per message basis; that is, the sender must demonstrate its knowledge of the shared secret, in this case, this is the personal PIN that the user specified during set-up of the user account. A command CMD may be sent from the wallet application to the MST 102 by sending the CMD and R_{MST}¹ signed using the PIN or a derivation of the PIN. Similarly, subsequent messages in the other direction (the MST 102 to the wallet application) are sent by sending the CMD and R_{W}¹ signed using the PIN. The use of the combination of the PIN and nonce ensure proper authentication and defense against replay for both parties. However, the protocol may still be susceptible to replay attack within a same handshake session. Therefore, a counter may be included in the CMD within a session. The sender may then increment the counter every time a new CMD is sent, and the receiver may check the counter to verify whether the counter is monotonically increasing.

In another embodiment, the server 106 stores a public-private key bind (K_{S} and K_{S}⁻¹). The server 106 may generate, for example, a self-signed certificate (Cert_{S}), a root certificate, intermediate certificate, signing certificate, etc. This certificate is used to verify certificate chain locally at the wallet application and the MST 102. The wallet application associated with the user account 112 also has a public-private key bind (K_{W} and K_{W}⁻¹). The private key is stored in a password-protected keystore or a keychain. The public key, user account ID and optionally some auxiliary information (used for verification purposes) are sent to the server 106 for certification. The wallet application securely possesses its identity certificate Cert_{W}, which is signed by server 106, and the wallet application securely possesses Certs in a trusted store. The MST 102 also has a public-private key bind (K_{MST} and K_{MST}⁻¹) generated at manufacturing. The MST 102 possesses its identity certificate Cert_{MST} and Cert_{S}, both assigned and installed at manufacturing.

Using the certificates and keys described above, the wallet application on the mobile communication device 104 can obtain the binding status of the MST 102 without the need for a network connection. To perform this function, the wallet application detects that the MST 102 is connected to the mobile communication device 104. The wallet application generates a random challenge R_{W} (such as, a time-stamp and a random number) and sends it to the MST 102. In response, the MST 102 generates a random challenge R_{MST}. The combination of R_{W} and R_{MST} represent a mutually-verifiable fresh nonce, and the MST 102 signs it with K_{MST}⁻¹. The MST 102 sends R_{MST}, the signature and its identity certificate Cert_{MST} to the wallet application.

The wallet application knows R_{W} and its freshness and can thus verify the signature as newly computed by the MST 102, thereby ruling out replay attack. Moreover, the wallet application can authenticate the MST 102 from the signature. If everything verifies, the wallet application generates a session key Kₛₑₛₛᵢₒₙ and a random sequence number Seq_{W} and then signs [R_{W}, R_{MST}, Kₛₑₛₛᵢₒₙ, and Seq_{W}]. The resulting signature and the wallet application's identity certificate Cert_{W} is sent to the MST 102. The MST is then able to authenticate the wallet application. The secrecy of the session key is guarded by the encryption using the MST's public key. At this stage, the MST 102 checks its internal state and answers if it is ready to perform new binding or it is currently bound with a user account.

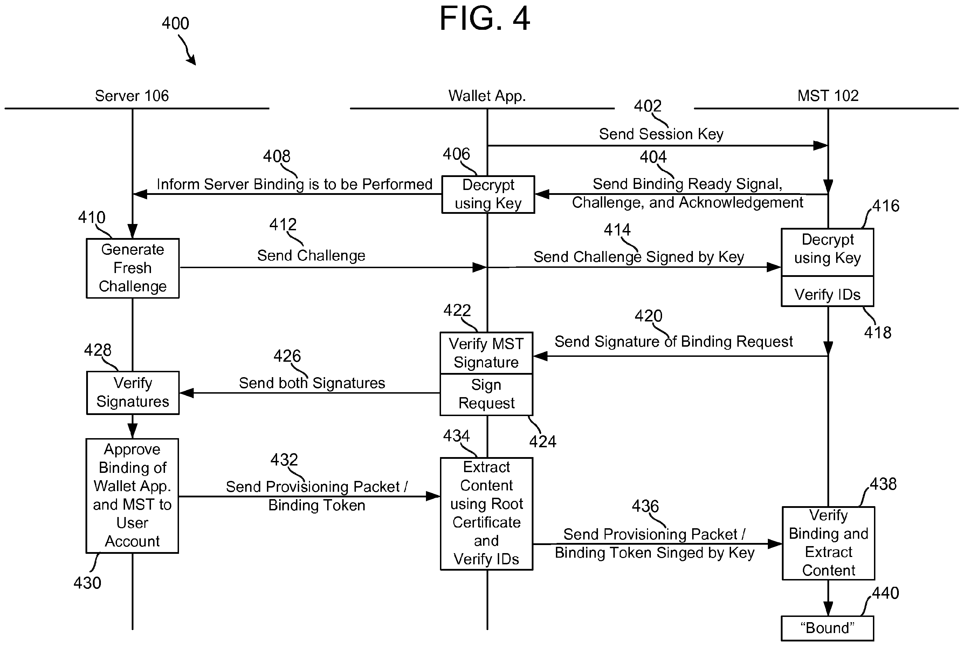

In this embodiment, a method 400 for performing a new binding is described with reference to FIG. 4. The wallet application sends the session key Kₛₑₛₛᵢₒₙ to the MST 102 (402). The MST 102 sends a binding ready signal (modeled as a constant PR) as well as a challenge [R_{W}, R_{MST}] and acknowledgement of the receipt of the session key Kₛₑₛₛᵢₒₙ to the wallet application (404). From this moment, the wallet application and the MST 102 use the session key Kₛₑₛₛᵢₒₙ. The wallet application decrypts the response from the MST 102 (404) using Kₛₑₛₛᵢₒₙ and obtains the MST state constant PR (406). The wallet application first informs the server 106 that a binding is to be performed (408); this intention is encoded with a constant pairing signing request (PSR), as well as the certificates of the MST 102 and the wallet application (Cert_{W}, Cert_{MST}). Upon receiving PSR, the server 106 generates a fresh challenge R_{S} (including a server time stamp, ID_{W} and ID_{MST}) (410) and sends the challenge to the wallet application (412).

The wallet application does not need to authenticate Rs since the transmission is over an SSL/TLS (RFC6101/RFC2246) session. The wallet application passes along R_{S}, together with R_{MST}, and the PSR message to the MST 102 signed by Kₛₑₛₛᵢₒₙ (414). The MST 102 decrypts the message using Kₛₑₛₛᵢₒₙ (416). The MST 102 can therefore assert that the message is from the wallet application and verify its freshness from R_{MST}. The MST 102 also verifies that the IDs inside R_{S} are itself and the wallet application (418). The MST 102 returns its signature of the request and therefore expresses its willingness to perform binding with the user account (420). The MST 102 returns R_{S} and PSR signed by K_{MST}⁻¹, all signed by Kₛₑₛₛᵢₒₙ to the wallet application. The wallet application verifies that the message is signed by the MST 102 with Cert_{MST} (422). The wallet application also signs the same inner content, resulting in R_{S} and PSR signed by K_{W}⁻¹ and thereby expresses its willingness to perform binding (424). Finally, the wallet application returns both signatures (R_{S} and PSR signed by K_{MST}⁻¹, and R_{S} and PSR signed by K_{W}⁻¹) to the server 106 over the secure channel (426).

The server 106 verifies with Certw and Cert_{MST} and recognizes the freshness of this signing request from R_{S} (428). The server 106 then performs a signing over R_{S} and effectively approves binding of the wallet application and the MST 102 to the user account 112, with a time-stamp signified from within R_{S} (R_{S} signed by K_{S}⁻¹) (430). The server 106 then sends this provisioning packet to the wallet application (432). The server 106 also saves the cryptogram ({R_{S}, PSR, Cert_{W}, Cert_{MST}, {R_{S}, PSR}K_{MST}⁻¹, {R_{S}, PSR}K_{W}⁻¹}) as evidence of issuing the provisioning packet or token (308).

The wallet application extracts the content using the root certificate Cert_{S} and verifies that ID_{W} and ID_{MST} are correct (434). If all are correct, the wallet application forwards the provisioning packet or token ({{R_{S}}K_{S}⁻¹}Kₛₑₛₛᵢₒₙ) to the MST 102 (436). The wallet application saves the cryptograms ({{R_{S}}K_{S}⁻¹, Cert_{MST}}) as a record for the binding. The MST 102 verifies the binding and extracts the content with root certificate Cert_{S} (438). The MST 102 then verifies that ID_{MST} is itself and ID_{W} is the correct user account associated with the wallet application. At this stage, it promotes its internal state to "bound" (440). The MST 102 also saves the cryptograms ({{R_{S}}K_{S}⁻¹, Cert_{W}}) for later handshakes with the same user account.

In this embodiment, the handshake (illustrated as block 212 in FIG. 2) may be performed as described below. The MST 102 is currently bound with a user account. The MST 102 compares the Cert_{W} it received (after authenticating the wallet account and/or the wallet application) and a wallet account ID from its stored provisioning packet {R_{S}}K_{S}⁻¹ that it received as described above. If the two match, the MST 102 sends a handshake complete signal (modeled as a constant "HC"), a randomly generated sequence number Seq_{MST} as well as the challenge {R_{W}, R_{MST}} and its acknowledgement of receipt of session key Kₛₑₛₛᵢₒₙ. From this moment, the wallet application and the MST 102 switch to using session key Kₛₑₛₛᵢₒₙ.

The wallet application reads the cipher text, decrypts and sees R_{W} so it understands the freshness of the message. The wallet application also sees HC, so it knows that the MST 102 has accepted the handshake. Finally, the wallet application compares the identity ID_{MST} with the one from R_{S} described above, if the two match, the wallet application promotes its internal state to handshake complete.

After the handshake is complete, both the wallet application and the MST 102 are ready to send and receive commands (illustrated as block 212 in FIG. 2). The combination of the session key (described above) and randomly generated sequence numbers from both parties are used to ensure proper security during this operation. Before sending/receiving any commands, both the wallet application and the MST 102 possess its own and know the other's sequence number. Seqⁱ denotes the sequence number of a principal (in this case either the wallet application or the MST 102) prior to its (i + 1)^{th} message transmission as a sender. Thus initially Seq⁰_{W} = Seq_{W} and Seq⁰_{MST} = Seq_{MST}. Where Seq_{W} and Seq_{MST} are sequence numbers as described above. Additionally, a deterministic function f that is known to both the wallet application and the MST 102 is defined, for either the wallet application or the MST 102 and the i^{th} sequence number Seqⁱ: f(Seqⁱ) = Seqⁱ⁺¹.

The message protocol and enforcement constraints are as follows: suppose at some stage principal X (i.e. the MST or the wallet application) has sent i number of commands to principal Y (i.e., the other of the MST or the wallet application) and the principal Y has sent j number of commands to principal X, and suppose that X is now sending the (i + 1)^{th} command to the Y. The format of the message may be : X→Y: {Seq^{j}_{Y}, Seqⁱ⁺¹_{X}, CMD}_{Ksession}, assuming without loss of generality that X received Seq^{j}_{Y}. Where, CMD is the specific command that X is sending to Y. Y decrypts the message using session key Kₛₑₛₛᵢₒₙ. Y compares Seq^{j}_{Y} with its currently stored sequence number, and takes the latest sequence number of X that Y received (which is Seqⁱ_{X}) and verifies that with Seqⁱ⁺¹_{X}. The combination of the session key (described above) and the sequence numbers from both parties are used to ensure proper security during this operation.

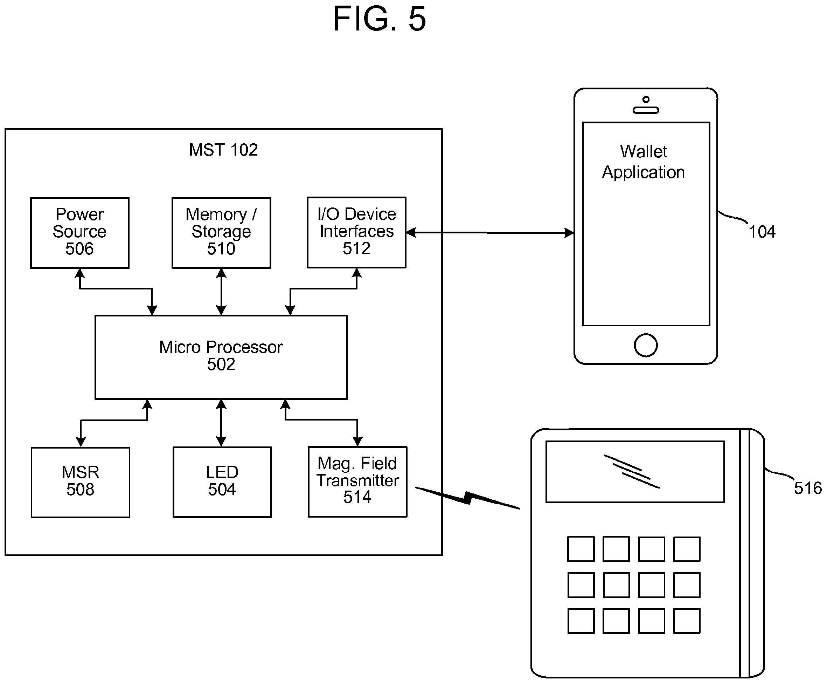

Once the MST 102 is bound with the user account 112, the MST 102 can be used to interact with a merchant point of sale (POS) by transmitting magnetic stripe data from a magnetic field transmitter to a magnetic stripe reader (MSR) of the merchant POS. As illustrated in FIG. 5, the MST 102 includes a microprocessor 502, a light-emitting diode (LED) indicator 504, a power source 506, optionally a magnetic stripe reader (MSR) 508, a memory storage component or secure element 510, an input/output interface 512 (for example, a 3.5mm or other standard audio port, a USB port/jack interface or other communication interface, including but not limited to a 30pin or 9pin Apple interface, a Bluetooth interface, and other serial interfaces), and a magnetic field transmitter 514 which includes a driver and an inductor for transmitting magnetic pulses to be received by any POS device with a MSR, such as the POS 516.

Microprocessor 502 handles security and communications with the mobile communication device 104. The microprocessor 502 can also transmit and receive encrypted card data to and from the secure element 510. The magnetic field transmitter 514 transmits magnetic stripe data of a cardholder to the POS device 516 by transmitting magnetic impulses to the MSR of the POS device 516. The MST 102 may also be used for reading other magnetic stripe cards by using the optional MSR 508. The MSR 508 may be used for loading payment card data onto the secure element 510 and for capturing card track data.

The mobile communication device 102 includes the wallet application, and may also include a display with key pad or touchpad display and a central processing unit (CPU). The wallet application initializes and unlocks the MST 102, interacts with the MST 102 and accepts card payment data from the MST 102.

The card data may be encrypted, and the encrypted data may be transmitted to the mobile communication device 104. The wallet application may transmit the data to the server. The data may be decrypted at the server and the primary account number (PAN) data, card number, expiration and name of the cardholder is stripped from the track data. The wallet application or the server may also make a determination as to whether the magnetic card is a payment card or a non-payment card. If the magnetic card is a non-payment card the MST 102 can automatically store the track data in the memory for non-payment transmission. If the magnetic card is a payment card, for example, having a specific format recognizable to the system, the card may be detected as a payment card and the system determines if the name on the payment card matches the name of the user account. If the name does not match, an error message may arise. If the name on the payment card matches the name of the user account, the system may determine if the PAN number matches an existing card already stored on the server, to either create a new account or leave the existing one. If a new card is created, the system may store the track data in a payment section of MST's secure memory encrypted.

The MST 102 has the ability to load any type of magnetic stripe card into the memory means, not just payment cards. Non-payment cards may be stored separately with less security for convenience. For example, some non-payment applications may include cards to open doors, loyalty cards, etc. The loading of payment data vs. non-payment data may be separated into two separate fields or storage areas. In an example, payment cards may not be loaded into non-payment storage. For example, payment data may have a specific format that can be detected and may not be allowed to be loaded into the non-payment storage area. The payment cards may also require authentication with the application before being transmitted. On the other hand, default non-payment data may be transmitted without authentication.

The devices, systems, and methods disclosed herein provide for the magnetic card track data to be captured and stored in the MST's secure memory means directly by the user without modification, and to be used later with a POS or other MSR device. The unique binding of a MST to a specific user account such that the MST can be only used with that account for track data storage and transmission use provides better security.

The MST is capable of connecting to mobile communication devices via different interfaces beyond audio jack and USB connections. The devices, systems, and methods allow for the loading of encrypted magnetic stripe track data into the memory means of the MST that can later be decrypted and transmitted to the POS, or can be transmitted encrypted to the mobile communication device and then routed to the payment server for decryption and processing for loading a user account on the server or processing a POS transaction. The devices, systems, and methods provide for the ability to use the stored track data or swiped track data for virtual checkout environments for a more secure and lower cost transaction for merchants. The devices, systems, and methods provide for the remote loading and transmission of track data from a card issuer to the wallet server provider, to the wallet application on the mobile communication device, and to the SE or memory means of the MST for later use. The devices, systems, and methods also provide for the ability to load loyalty account information along with the payment card data into one or more discretionary fields of the track data to be read by the issuer during or after a transaction, which can lead to offers and loyalty programs combined with a payment transaction.

The mobile communication device may be a laptop computer, a cellular phone, a personal digital assistant (PDA), a tablet computer, and other mobile devices of the type. Communications between components and/or devices in the systems and methods disclosed herein may be unidirectional or bidirectional electronic communication through a wired or wireless configuration or network. For example, one component or device may be wired or networked wirelessly directly or indirectly, through a third party intermediary, over the Internet, or otherwise with another component or device to enable communication between the components or devices. Examples of wireless communications include, but are not limited to, radio frequency (RF), infrared, Bluetooth, wireless local area network (WLAN) (such as WiFi), or wireless network radio, such as a radio capable of communication with a wireless communication network such as a Long Term Evolution (LTE) network, WiMAX network, 3G network, 4G network, and other communication networks of the type.

While "binding" is discussed herein effectively as a pairing of device to account, those skilled in the art should appreciate that in addition to one-to-one binding, one-to-many binding may be effected according to the disclosure. That is one specific user device/MST may be bound to one or more specific, owned accounts, or one account may be bound to one or more specific, owned devices."

## Claims

1. A method of binding a magnetic stripe transporter (MST) (102) to a user account (112) set-up on a server (106), comprising:
determining, by an application on a mobile communication device (104), that the MST is connected to the mobile communication device, the MST to be used in conjunction with the application to emit magnetic pulses corresponding to magnetic stripe card data;
sending, by the application after determining that the MST is connected and the MST has not been bound to a user account, a query for binding information to the MST;
generating, by the MST (102), a random number R_{MST};
sending, by the MST (102) to the application, a response to the query, (304) the response comprising the random number R_{MST} and a unique identifier of the MST ID_{MST};
sending, by the application, a binding request (306) to the server (106), the binding request (306) including account information in the form of a username and password associated with the user account (112), and comprising the random number R_{MST} and the unique identifier of the MST;
receiving, by the application, a binding token (308) from the server (106) in response to the binding request, the binding token signed using a key corresponding to the MST, and comprising a personal identification number (PIN) and the random number R_{MST}, the PIN being a secret associated with the user account (112) that was shared between the server and a user during set-up;
sending the binding token (308) to the MST (102);
verifying, by the MST(102), that the binding token was signed using the key corresponding to the MST and that the random number R_{MST} in the binding token matches the random number R_{MST} in the response to the query; and
installing the PIN in the MST (102) after verifying the binding token (308), thereby binding the MST (102) to the user account (112)
wherein the PIN is used to authenticate the user before allowing the user to operate the MST(102).

2. The method of claim 1, further comprising generating, by the application, a random number R_{W}, wherein the sending of the query for binding information to the MST includes sending an indication to initiate binding that includes a random number R_{W}, wherein the MST (102) includes a signature based on the random number R_{W} in response to the query when sending the response to the query, and the application verifies the signature after receiving the response.

3. The method of claim 1, wherein the binding request (306) identifies the user account (112) associated with the application with the included usemame and password.

4. The method of claim 1, wherein the binding token (308) further includes a server generated time-stamp (RS) wherein verifying the binding token further comprises verifying the server generated time-stamp (RS).

5. The method of claim 1, further comprising computing, by the server (106), the key corresponding to the MST based on the unique identifier of the MST ID_{MST} included in the binding request (306).

6. The method of claim 1, further comprising:
storing the magnetic stripe card data on the MST (102) after binding the MST to the user account (112);
authenticating the user, by the MST, using the installed PIN before allowing the user to operate the MST (102) to transmit the magnetic stripe card data; and
transmitting, by the MST, the magnetic pulses corresponding to the stored magnetic stripe card data after authenticating the user.

7. A method of binding a magnetic stripe transporter (MST) (102) to a user account (112), comprising:
receiving, by the MST (102), a query (302) for binding information from a computing device (104);
sending, by the MST (102), a response (304) to the query to the computing device (104), the response comprising a MST generated random number R_{MST} and a unique identifier of the MST ID_{MST};
receiving, by the MST after sending the response, a binding token (308) generated by a server (106) after the server determines (216) that the MST (102) is not bound to another user account based on the identifier (ID_{MST}) and the server having received a binding request (306) including account information in the form of a username and password associated with the user account (112) and comprising the random number R_{MST} and the unique identifier of the MST, the binding token (308) signed using a key corresponding to the MST, and comprising a personal identification number (PIN) and the random number R_{MST}, the PIN being a secret associated with the user account (112) that was shared between the server (106) and the user during set-up;
verifying, by the MST (102), that the binding token (308) was signed using the key corresponding to the MST and that the random number R_{MST} in the binding token matches the random number R_{MST} in the response to the query (302); and
binding the MST (102) to the user account (112) by installing the personal identification information (PIN) in the MST (102) in response to the verification of the binding token (308);
wherein the PIN is used to authenticate the user before allowing the user to operate the MST (102).

8. The method of claim 7, wherein the receiving the query (302) includes receiving an indication to initiate binding, the indication including a random number (R_{W}) generated by an application of the computing device (104), and the MST includes a signature based on the random number R_{W} in the response.

9. The method of claim 7, wherein the receiving the binding token (308) includes receiving back the random number R_{MST} included in the response, and receiving a server generated time-stamp (RS), and wherein verifying the binding token (308) includes verifying the server generated time-stamp (RS).

10. A method of binding a magnetic stripe transporter (MST) (102) to a first user account (112) set-up on a server (106), comprising:
receiving, by the server (106), a binding request (306) including account information in the form of a username and a password received via user input, and identificationID_{MST} corresponding to the MST (102) and a MST generated random number (R_{MST});
authenticating a user corresponding to the first user account based on the account information;
determining, by the server (106), that the identification ID_{MST} corresponding to the MST is valid and that the MST (102) is not bound (216) to a second user account; and
sending, by the server (106) to the MST (102), a binding token (308) for use in binding the MST (102) to the first user account (112) in response to determining that the information corresponding to the MST is valid and the MST is not bound to the second user account,
wherein the binding token (308) is signed using a key corresponding to the MST, and comprising a personal identification number (PIN) and the random number (R_{MST}), the PIN being a secret associated with the first user account (112) that was shared between the server (106) and the user during set-up;
verifying, by the MST, that the binding token was signed using the key corresponding to the MST and that the random number R_{MST} in the binding token matches the random number R_{MST} generated by the MST (102);
installing the PIN in the MST (102) after verifying the binding token (308), thereby binding the MST (102) to the user account (112)
wherein the PIN is used to authenticate the user before allowing the user to operate the MST(102).

11. The method of claim 10, further comprising computing a key (K_{MST}) corresponding to the MST using the identification of the MST received in the binding request; and:
signing, by the server (106), the binding token (308) using the key (K_{MST}) prior to sending the binding token.

12. The method of claim 11, the method further comprising generating a time-stamp, wherein the binding token (308) includes the time-stamp (RS) computed by the server (106), and the PIN signed using the key (K_{MST}).

13. The method of claim 10, wherein the binding token (308) is forwarded (310) to the MST (102) by a computing device (104).

14. The method of claim 13, wherein the binding token (308) is sent to the computing device (104).

15. The method of claim 13, wherein the binding token (308) is sent to the MST by the computing device (104).

16. The method of claim 15, wherein the binding token (308) is validated by the MST (102) for authenticity.

## Patentansprüche

1. Verfahren zum Verbinden eines Magnetstreifentransporters (MST) (102) mit einem Benutzerkonto (112), das auf einem Server (106) eingerichtet ist, umfassend:
ein Bestimmen, durch eine Anwendung auf einer mobilen Kommunikationsvorrichtung (104), dass der MST an die mobile Kommunikationsvorrichtung angeschlossen ist, wobei der MST in Verbindung mit der Anwendung zu verwenden ist, um Magnetimpulse entsprechend Magnetstreifenkartendaten auszugeben;
ein Senden, durch die Anwendung, nach dem Bestimmen, dass der MST angeschlossen ist und der MST nicht mit einem Benutzerkonto verbunden wurde, einer Anfrage nach Verbindungsinformationen an den MST;
ein Generieren, durch den MST (102), einer Zufallszahl R_{MST};
ein Senden, durch den MST (102) an die Anwendung, einer Antwort auf die Anfrage, (304), wobei die Antwort die Zufallszahl R_{MST} und eine eindeutige Kennung des MST ID_{MST} umfasst;
ein Senden, durch die Anwendung, einer Verbindungsanfrage (306) an den Server (106), wobei die Verbindungsanfrage (306) Kontoinformationen in Form eines Benutzernamens und eines Kennworts, die dem Benutzerkonto (112) zugeordnet sind, beinhaltet und die Zufallszahl R_{MST} und die eindeutige Kennung des MST umfasst;
ein Empfangen, durch die Anwendung, eines Verbindungszeichens (308) vom Server (106) in Reaktion auf die Verbindungsanfrage, wobei das Verbindungszeichen mithilfe eines dem MST entsprechenden Schlüssels unterzeichnet ist, und eine persönliche Identifikationsnummer (PIN) und die Zufallszahl R_{MST} umfasst, wobei die PIN ein Geheimnis ist, das dem Benutzerkonto (112) zugeordnet ist, welches während des Einrichtens zwischen dem Server und einem Benutzer geteilt wurde,
ein Senden des Verbindungszeichens (308) an den MST (102);
ein Verifizieren, durch den MST (102), dass das Verbindungszeichen mithilfe des dem MST entsprechenden Schlüssels unterzeichnet wurde und dass die Zufallszahl R_{MST} im Verbindungszeichen mit der Zufallszahl R_{MST} übereinstimmt, in der Antwort auf die Anfrage; und
ein Installieren der PIN im MST (102) nach dem Verifizieren des Verbindungszeichens (308), dadurch Verbinden des MST (102) mit dem Benutzerkonto (112),
wobei die PIN verwendet wird, um den Benutzer zu authentifizieren, bevor dem Benutzer erlaubt wird, den MST (102) zu bedienen.

2. Verfahren nach Anspruch 1, ferner umfassend ein Generieren, durch die Anwendung, einer Zufallszahl Rw, wobei das Senden der Anfrage nach Verbindungsinformationen an den MST das Senden einer die Zufallszahl R_{w} beinhaltenden Anzeige zum Initiieren einer Verbindung beinhaltet,
wobei der MST (102) eine Signatur basierend auf der Zufallszahl Rw in der Antwort auf die Anfrage beinhaltet, wenn er die Antwort auf die Anfrage sendet, und die Anwendung die Signatur nach dem Empfangen der Antwort verifiziert.

3. Verfahren nach Anspruch 1, wobei die Verbindungsanfrage (306) das der Anwendung zugeordnete Benutzerkonto (112) mit dem beinhalteten Benutzernamen und Kennwort identifiziert.

4. Verfahren nach Anspruch 1, wobei das Verbindungszeichen (308) ferner einen servergenerierten Zeitstempel (RS) enthält, wobei das Verifizieren des Verbindungszeichens ferner ein Verifizieren des servergenerierten Zeitstempels (RS) umfasst.

5. Verfahren nach Anspruch 1, ferner umfassend ein Berechnen, durch den Server (106), des dem MST entsprechenden Schlüssels basierend auf der eindeutigen Kennung des MST IDMST, die in der Verbindungsanfrage (306) beinhaltet sind.

6. Verfahren nach Anspruch 1, ferner umfassend:
ein Speichern der Magnetstreifenkartendaten auf dem MST (102) nach dem Verbinden des MST mit dem Benutzerkonto (112);
ein Authentifizieren des Benutzers, durch den MST, mithilfe der installierten PIN, bevor dem Benutzer erlaubt wird, den MST (102) zu bedienen, um die Magnetstreifenkartendaten zu übertragen; und
ein Übertragen, durch den MST, der Magnetimpulse entsprechend den gespeicherten Magnetstreifenkartendaten nach dem Authentifizieren des Benutzers.

7. Verfahren zum Verbinden eines Magnetstreifentransporters (MST) (102) mit einem Benutzerkonto (112), umfassend:
ein Empfangen, durch den MST (102), einer Anfrage (302) nach Verbindungsinformationen von einer Rechenvorrichtung (104);
ein Senden, durch den MST (102), einer Antwort (304) auf die Anfrage an die Rechenvorrichtung (104), wobei die Antwort eine MST-erzeugte Zufallszahl R_{MST} und eine eindeutige Kennung des MST ID_{MST} umfasst;
ein Empfangen, durch den MST, nach dem Senden der Antwort, eines Verbindungszeichens (308), das durch einen Server (106) generiert wird, nachdem der Server bestimmt (216), dass der MST (102) nicht mit einem anderen Benutzerkonto verbunden ist, basierend auf der Kennung (ID_{MST}) und darauf, dass der Server eine Verbindungsanfrage (306) empfangen hat, die Kontoinformationen in Form eines Benutzernamens und Kennworts beinhaltet, die dem Benutzerkonto (112) zugeordnet sind, und umfassend die Zufallszahl R_{MST} und die eindeutige Kennung des MST, wobei das Verbindungszeichen (308) mithilfe eines dem MST entsprechenden Schlüssels unterzeichnet ist und eine persönliche Identifikationsnummer (PIN) und die Zufallszahl R_{MST} umfasst, wobei die PIN ein dem Benutzerkonto (112) zugeordnetes Geheimnis ist, das zwischen dem Server (106) und dem Benutzer während der Einrichtung geteilt wurde;
ein Verifizieren, durch den MST (102), dass das Verbindungszeichen (308) mithilfe des dem MST entsprechenden Schlüssels unterzeichnet wurde und dass die Zufallszahl R_{MST} im Verbindungszeichen mit der Zufallszahl R_{MST} übereinstimmt, in der Antwort auf die Anfrage (302); und
ein Verbinden des MST (102) mit dem Benutzerkonto (112) durch Installieren der persönlichen Identifikationsinformationen (PIN) im MST (102) in Reaktion auf die Verifizierung des Verbindungszeichens (308);
wobei die PIN verwendet wird, um den Benutzer zu authentifizieren, bevor dem Benutzer erlaubt wird, den MST (102) zu bedienen.

8. Verfahren nach Anspruch 7, wobei das Empfangen der Anfrage (302) ein Empfangen einer Anzeige zum Initiieren der Verbindung enthält, wobei die Anzeige eine von einer Anwendung der Rechenvorrichtung (104) generierte Zufallszahl (R_{w}) enthält und der MST eine Signatur basierend auf der Zufallszahl R_{w} in der Antwort enthält.

9. Verfahren nach Anspruch 7, wobei das Empfangen des Verbindungszeichens (308) ein Zurück-Empfangen der in der Antwort enthaltenen Zufallszahl R_{MST} und ein Empfangen eines servergenerierten Zeitstempels (RS) beinhaltet, und
wobei das Verifizieren des Verbindungszeichens (308) ein Verifizieren des servergenerierten Zeitstempels (RS) beinhaltet.

10. Verfahren zum Verbinden eines Magnetstreifentransporters (MST) (102) mit einem ersten Benutzerkonto (112), das auf einem Server (106) eingerichtet ist, umfassend:
ein Empfangen, durch den Server (106), einer Verbindungsanfrage (306), die Kontoinformationen in der Form eines Benutzernamens und eines Kennworts beinhaltet, die über eine Benutzereingabe empfangen wurden, und einer dem MST (102) entsprechenden Identifikation ID_{MST} und einer MST-generierten Zufallszahl (R_{MST});
ein Authentifizieren eines Benutzers entsprechend dem ersten Benutzerkonto basierend auf den Kontoinformationen;
ein Bestimmen, durch den Server (106), dass die dem MST entsprechende Identifikation ID_{MST} gültig ist und dass der MST (102) nicht mit einem zweiten Benutzerkonto verbunden (216) ist; und
ein Senden, durch den Server (106), an den MST (102), eines Verbindungszeichens (308) zur Verwendung beim Verbinden des MST (102) mit dem ersten Benutzerkonto (112) in Reaktion auf das Bestimmen, dass die dem MST entsprechenden Informationen gültig sind und das MST nicht mit dem zweiten Benutzerkonto verbunden ist,
wobei das Verbindungszeichen (308) mithilfe eines dem MST entsprechenden Schlüssels unterzeichnet ist und eine persönliche Identifikationsnummer (PIN) und die Zufallszahl (RMST) umfasst, wobei die PIN ein Geheimnis ist, das dem ersten Benutzerkonto (112) zugeordnet ist, welches während des Einrichtens zwischen dem Server (106) und dem Benutzer geteilt wurde;
ein Verifizieren, durch den MST, dass das Verbindungszeichen mithilfe des dem MST entsprechenden Schlüssels unterzeichnet wurde und dass die Zufallszahl R_{MST} im Verbindungszeichen mit der Zufallszahl R_{MST} übereinstimmt, die vom MST (102) generiert wurde;
ein Installieren der PIN im MST (102) nach dem Verifizieren des Verbindungszeichens (308), dadurch Verbinden des MST (102) mit dem Benutzerkonto (112),
wobei die PIN verwendet wird, um den Benutzer zu authentifizieren, bevor dem Benutzer erlaubt wird, den MST (102) zu bedienen.

11. Verfahren nach Anspruch 10, ferner umfassend ein Berechnen eines Schlüssels (K_{MST}), der dem MST entspricht, mithilfe der in der Verbindungsanfrage empfangenen Identifikation des MST; und:
ein Unterzeichnen, durch den Server (106) des Verbindungszeichens (308) mithilfe des Schlüssels (K_{MST}) vor dem Senden des Verbindungszeichens.

12. Verfahren nach Anspruch 11, wobei das Verfahren ferner umfasst ein Generieren eines Zeitstempels, wobei das Verbindungszeichen (308) den vom Server (106) berechneten Zeitstempel (RS) und die mithilfe des Schlüssels (K_{MST}) unterzeichnete PIN beinhaltet.

13. Verfahren nach Anspruch 10, wobei das Verbindungszeichen (308) durch eine Rechenvorrichtung (104) an den MST (102) weitergeleitet (310) wird.

14. Verfahren nach Anspruch 13, wobei das Verbindungszeichen (308) an die Rechenvorrichtung (104) gesendet wird.

15. Verfahren nach Anspruch 13, wobei das Verbindungszeichen (308) durch die Rechenvorrichtung (104) an den MST gesendet wird.

16. Verfahren nach Anspruch 15, wobei das Verbindungszeichen (308) durch den MST (102) zur Authentifizierung validiert wird.

## Revendications

1. Procédé de liaison d'un porte-bande magnétique (MST) (102) à un compte utilisateur (112) configuré sur un serveur (106), comprenant :
la détermination, par une application sur un dispositif de communication mobile (104), que le MST est connecté au dispositif de communication mobile, le MST devant être utilisé conjointement avec l'application pour émettre des impulsions magnétiques correspondant aux données de carte à bande magnétique ;
l'envoi, par l'application après avoir déterminé que le MST est connecté et que le MST n'a pas été lié à un compte utilisateur, d'une requête pour lier des informations au MST ;
la génération, par le MST (102), d'un nombre aléatoire R_{MST} ;
l'envoi, par le MST (102) à l'application, d'une réponse à la requête (304), la réponse comprenant
le nombre aléatoire R_{MST} et un identifiant unique du MST ID_{MST} ;
l'envoi, par l'application, d'une demande de liaison (306) au serveur (106), la demande de liaison (306) comprenant des informations de compte sous la forme d'un nom d'utilisateur et d'un mot de passe associé au compte utilisateur (112), et comprenant le nombre aléatoire R_{MST} et l'identifiant unique du MST ;
la réception, par l'application, d'un jeton de liaison (308) en provenance du serveur (106) en réponse à la demande de liaison, le jeton de liaison étant signé à l'aide d'une clé correspondant au MST, et comprenant un numéro d'identification personnel (PIN) et le numéro aléatoire R_{MST}, le PIN étant un secret associé au compte utilisateur (112) qui a été partagé entre le serveur et un utilisateur durant la configuration ;
l'envoi du jeton de liaison (308) au MST (102) ;
la vérification, par le MST (102),
que le jeton de liaison a été signé à l'aide de la clé correspondant au MST et que le nombre aléatoire R_{MST} dans le jeton de liaison correspond au nombre aléatoire R_{MST} dans la réponse à la requête ; et
l'installation du code PIN dans le MST (102) après avoir vérifié le jeton de liaison (308), liant ainsi le MST (102) au compte utilisateur (112)
ledit PIN étant utilisé pour authentifier l'utilisateur avant de permettre à l'utilisateur d'utiliser le MST (102).

2. Procédé selon la revendication 1, comprenant en outre la génération, par l'application, d'un nombre aléatoire R_{w}, ledit envoi de la requête pour la liaison des informations au MST comprenant l'envoi d'une indication pour initier la liaison qui comprend un nombre aléatoire R_{w},
ledit MST (102) comprenant une signature sur la base du nombre aléatoire R_{w} en réponse à la requête lors de l'envoi de la réponse à la requête, et ladite application vérifiant la signature après réception de la réponse.

3. Procédé selon la revendication 1, ladite demande de liaison (306) identifiant le compte utilisateur (112) associé à l'application avec le nom d'utilisateur et le mot de passe compris.

4. Procédé selon la revendication 1, ledit jeton de liaison (308) comprenant en outre un horodatage (RS) généré par le serveur, ladite vérification du jeton de liaison comprenant en outre la vérification de l'horodatage (RS) généré par le serveur.

5. Procédé selon la revendication 1, comprenant en outre le calcul, par le serveur (106), de la clé correspondant au MST sur la base de l'identifiant unique du MST ID_{MST} compris dans la demande de liaison (306).

6. Procédé selon la revendication 1, comprenant en outre :
le stockage des données de carte à bande magnétique sur le MST (102) après avoir lié le MST au compte utilisateur (112) ;
l'authentification de l'utilisateur, par le MST, à l'aide du code PIN installé avant de permettre à l'utilisateur d'utiliser le MST (102) pour transmettre les données de carte à bande magnétique ; et
l'émission, par le MST,
des impulsions magnétiques correspondant aux données de carte à bande magnétique stockées après authentification de l'utilisateur.

7. Procédé de liaison d'un porte-bande magnétique (MST) (102) à un compte utilisateur (112), comprenant :
la réception, par le MST (102), d'une requête (302) pour lier des informations en provenance d'un dispositif informatique (104) ;
l'envoi, par le MST (102), d'une réponse (304) à la requête au dispositif informatique (104), la réponse comprenant un nombre aléatoire, R_{MST}, généré par MST et un identifiant unique du MST ID_{MST} ;
la réception, par le MST après l'envoi de la réponse, d'un jeton de liaison (308) généré par un serveur (106) après que le serveur a déterminé (216) que le MST (102) n'est pas lié à un autre compte utilisateur sur la base de l'identifiant (ID_{MST}) et le serveur ayant reçu une demande de liaison (306) comprenant des informations de compte sous la forme d'un nom d'utilisateur et d'un mot de passe associé au compte utilisateur (112) et comprenant le nombre aléatoire R_{MST} et l'identifiant unique du MST, le jeton de liaison (308) signé à l'aide d'une clé correspondant au MST, et comprenant un numéro d'identification personnel (PIN) et le nombre aléatoire R_{MST}, le PIN étant un secret associé au compte utilisateur (112) partagé entre le serveur (106) et l'utilisateur durant la configuration ;
la vérification, par le MST (102), que le jeton de liaison (308) a été signé à l'aide de la clé correspondant au MST et que le nombre aléatoire R_{MST} dans le jeton de liaison correspond au nombre aléatoire R_{MST} dans la réponse à la requête (302) ; et
la liaison du MST (102) au compte utilisateur (112) en installant les informations d'identification personnelle (PIN) dans le MST (102) en réponse à la vérification du jeton de liaison (308) ;
ledit PIN étant utilisé pour authentifier l'utilisateur avant de permettre à l'utilisateur d'utiliser le MST (102).

8. Procédé selon la revendication 7, ladite réception de la requête (302) comprenant la réception d'une
indication pour initier la liaison, l'indication comprenant un nombre aléatoire (R_{W}) généré par une application du dispositif informatique (104), et ledit MST comprenant une signature basée sur le nombre aléatoire R_{W} dans la réponse.

9. Procédé selon la revendication 7, ladite réception du jeton de liaison (308) comprenant la réception en retour du nombre aléatoire R_{MST} compris dans la réponse, et la réception d'un horodatage (RS) généré par le serveur, et
ladite vérification du jeton de liaison (308) comprenant la vérification de l'horodatage (RS) généré par le serveur.

10. Procédé de liaison d'un porte-bande magnétique (MST) (102) à un premier compte utilisateur (112) configuré sur un serveur (106), comprenant :
la réception, par le serveur (106), d'une demande de liaison (306) comprenant des informations de compte sous la forme d'un nom d'utilisateur et d'un mot de passe reçus par l'intermédiaire d'une entrée utilisateur, et une identification ID_{MST} correspondant au MST (102) et un nombre aléatoire (R_{MST}) généré par MST ;
l'authentification d'un utilisateur correspondant au premier compte utilisateur sur la base des informations de compte ;
la détermination, par le serveur (106), que l'ID_{MST} d'identification correspondant au MST est valide et que le MST (102) n'est pas lié (216) à un second compte utilisateur ; et
l'envoi, par le serveur (106) au MST (102), d'un jeton de liaison (308) destiné à être utilisé pour lier le MST (102) au premier compte utilisateur (112) en réponse à la détermination que les informations correspondant au MST sont valides et le MST n'est pas lié au second compte utilisateur,
ledit jeton de liaison (308) est signé à l'aide d'une clé correspondant au MST, et comprenant un numéro d'identification personnel (PIN) et le nombre aléatoire (R_{MST}), le PIN étant un secret associé au premier compte utilisateur (112) qui a été partagé entre le serveur (106) et l'utilisateur durant la configuration ;
la vérification, par le MST, que le jeton de liaison a été signé à l'aide de la clé correspondant au MST et que le nombre aléatoire R_{MST} dans le jeton de liaison correspond au nombre aléatoire R_{MST} généré par MST (102) ;
l'installation du code PIN dans le MST (102) après avoir vérifié le jeton de liaison (308), liant ainsi le MST (102) au compte utilisateur (112)
ledit PIN étant utilisé pour authentifier l'utilisateur avant de permettre à l'utilisateur d'utiliser le MST (102).

11. Procédé selon la revendication 10, comprenant en outre le calcul d'une clé (K_{MST}) correspondant au MST à l'aide de l'identification du MST reçue dans la demande de liaison ; et :
la signature, par le serveur (106), du jeton de liaison (308) à l'aide de la clé (K_{MST}) avant d'envoyer le jeton de liaison.

12. Procédé selon la revendication 11, le procédé comprenant en outre la génération d'un horodatage, ledit jeton de liaison (308) comprenant l'horodatage (RS) calculé par le serveur (106) et le PIN signé à l'aide de la clé (K_{MST}).

13. Procédé selon la revendication 10, ledit jeton de liaison (308) étant transmis (310) au MST (102) par un dispositif informatique (104).

14. Procédé selon la revendication 13, ledit jeton de liaison (308) étant envoyé au dispositif informatique (104).

15. Procédé selon la revendication 13, ledit jeton de liaison (308) étant envoyé au MST par le dispositif informatique (104).

16. Procédé selon la revendication 15, ledit jeton de liaison (308) étant validé par le MST (102) pour son authenticité.
